# EUROPEAN PATENT APPLICATION

(11) **EP 4 692 251 A1**
(43) Date of publication of application: **11.02.2026**
(21) Application number: 24778628.8
(22) Date of filing: 26.01.2024
(51) Int. Cl.: C09D 11/101

(54) **ACTIVE ENERGY RAY-CURABLE INK, METHOD FOR PRODUCING SAME, AND PRINTED MATTER**

(30) Priority: 29.03.2023 JP 2023052514
(71) Applicant: Artience Co., Ltd., Chuo-ku Tokyo 104-8377 (JP); Toyo Ink Co., Ltd., Tokyo 104-8378 (JP)
(72) Inventor: SHIOZAWA, Tatsuya, Tokyo 104-8378 (JP); OKAMOTO, Kazuya, Tokyo 104-8378 (JP); FUKUCHI, Yoshihisa, Tokyo 104-8378 (JP)
(74) Representative: SSM Sandmair
(86) International application number: PCT/JP2024/002444
(87) International publication number: WO 2024/202482

(57) **Abstract**

Provided is an active energy ray-curable ink including: a urethane (meth)acrylate (A); and a (meth)acrylic compound (B) other than (A), wherein a (meth)acryloyl group concentration in the urethane (meth)acrylate (A) is within a range from 4.0 to 8.0 mmol/g.

## Description

### TECHNICAL FIELD

One or more embodiments of the present invention relates to an active energy ray-curable ink, a method of producing the same, and a printed item.

### BACKGROUND ART

In recent years, demands for shorter turnaround time and environmental friendliness in printing have increased. With these demands, the use of quick-drying, solvent-free active energy ray-curable ink has been expanding in place of conventional oil-based inks. The active energy ray-curable ink contains as a constituent an unsaturated compound having active energy ray-curability, such as an acrylic ester compound. The active energy ray-curable ink containing the unsaturated compound is rapidly cured on irradiation with an active energy ray and forms a tough film due to three-dimensional cross-linking of the unsaturated compound. Since the active energy ray-curable ink is rapidly cured, post-processing can be performed immediately after printing. Thus, the active energy ray-curable ink is suitably used in package printing for packaging where a strong film is required to improve productivity and protect designs, form printing in the commercial field, and the like.

In the active energy ray-curable ink (hereinafter, sometimes referred to as ink), a binder resin represented by a diallyl phthalate resin is often used to give printability. However, since most binder resins do not have (meth)acryloyl groups, binder resins do not participate in formation of three-dimensional crosslinking in cured films of the active energy ray-curable ink, resulting in deterioration of curability of the ink. In contrast, using a urethane acrylate, which is a binder resin having a (meth)acryloyl group, can address the curability issue of the ink.

For example, Patent Document 1 discloses an ink using a urethane acrylate which contains a hydroxyethyl acrylate, polyol, and polymeric MDI as raw materials, and has a (meth)acryloyl group concentration within a range from 1.5 to 3.9 mmol/g. Patent Document 2 discloses an ink using a urethane acrylate which contains a pentaerythritol triacrylate, a polypropylene glycol having a molecular weight of 1,000, and an isophorone diisocyanate as raw materials. However, the (meth)acryloyl group concentration in the urethane acrylate in Patent Document 2 is only about 1.6 mmol/g. At printing sites, further improvement in productivity and reduction in the amount of active energy radiation are required. Thus, further introduction of (meth)acryloyl groups into the urethane acrylate is required to improve the curability of ink.

Compared with oil-based inks, active energy ray-curable inks tend to have issues such as tendency of ink mist to be generated by rotation of a roller in a printing machine, causing the printing machine to become dirty, and the ink not being scraped from an ink fountain by a roller during printing ("ink backing away" from the ink fountain) due to the lack of fluidity of the ink.

### PRIOR ART DOCUMENTS

### PATENT DOCUMENTS

Patent Document 1: WO 2016/63625
Patent Document 2: JP 60-161468 A

### SUMMARY OF THE INVENTION

### PROBLEMS TO BE SOLVED BY THE INVENTION

The present invention provides an active energy ray-curable ink having improved printability and curability, and a printed item using the same.

### MEANS TO SOLVE THE PROBLEMS

The present inventors have discovered that an active energy ray-curable ink containing urethane (meth)acrylate with a (meth)acryloyl group concentration having a range from 4.0 to 8.0 mmol/g can eliminate issues of ink mist and ink backing away during printing and has excellent curability, and thus have arrived at the present invention. Embodiments of the present invention will be described below, but the present invention is not limited to embodiments described below, and various modifications can be made.
<1> An active energy ray-curable ink including: a urethane (meth)acrylate (A); and a (meth)acrylic compound (B) other than (A), wherein a (meth)acryloyl group concentration in the urethane (meth)acrylate (A) is within a range from 4.0 to 8.0 mmol/g.
<2> The active energy ray-curable ink according to the above <1>, wherein the urethane (meth)acrylate (A) is a reaction product of a (meth)acrylic compound having one or more hydroxyl groups (a1), a polyol compound (a2) other than (a1), and an isocyanate compound (a3).
<3> The active energy ray-curable ink according to the above <2>, wherein the (meth)acrylic compound having one or more hydroxyl groups (a1) includes at least one selected from the group consisting of a pentaerythritol poly (meth)acrylate, a dipentaerythritol poly (meth)acrylate, and a polypentaerythritol poly (meth)acrylate.
<4> The active energy ray-curable ink according to the above <2> or <3>, wherein the polyol compound (a2) includes at least one selected from the group consisting of a polyol compound having 3 to 20 carbon atoms, and an alkylene oxide modified product of a polyol compound having 3 to 20 carbon atoms.
<5> The active energy ray-curable ink according to any one of the above <2> to <4>, wherein the polyol compound (a2) includes at least one selected from the group consisting of a propylene glycol, a butanediol, a neopentyl glycol, a hexanediol, an octanediol, a decanediol, glycerol, trimethylolpropane, pentaerythritol, and an alkylene oxide modified product thereof.
<6> The active energy ray-curable ink according to any one of the above <2> to <5>, wherein the polyol compound (a2) has a hydroxyl value within a range from 125 to 1,850 mg KOH/g.
<7> The active energy ray-curable ink according to any one of the above <2> to <6>, wherein the isocyanate compound (a3) is a diisocyanate compound.
<8> The active energy ray-curable ink according to any one of the above <2> to <7>, wherein a ratio [(al') / (a3')] of the number of moles (a1') in hydroxyl groups contained in the (meth)acrylic compound having one or more hydroxyl groups (a1) relative to the number of moles (a3') in isocyanate groups contained in the isocyanate compound (a3) is within a range from 0.2 to 0.6.
<9> A method of producing the active energy ray-curable ink according to any one of the above <1> to <8>, the method including: a step of obtaining a urethane (meth)acrylate (A) by reacting a (meth)acrylic compound having one or more hydroxyl groups (a1), a polyol compound (a2) which is other than the (a1), and an isocyanate compound (a3), in a (meth)acrylic compound (B).
<10> A printed item including: a cured product of the active energy ray-curable ink according to any one of the above <1> to <8> on a substrate.

This Application is related to the subject matter disclosed in prior Japanese Application 2023-052514, filed on March 29, 2023, the entire contents of which are incorporated by reference herein.

### EFFECTS OF THE INVENTION

The present invention provides an active energy ray-curable ink having improved printability and curability, and provides a printed item using the same, which are extremely useful in industry.

### EMBODIMENTS FOR CARRYING OUT THE INVENTION

Embodiments of the present invention are described below in detail. However, the present invention is not limited to the embodiments described below, and various modifications can be made without departing from the summary of the present invention.

Note that in the description, the term "(meth)acrylate" means an acrylate and/or a methacrylate. The term "(meth)acryloyl group" means an acryloyl group and/or a methacryloyl group.

In the specification, "(meth)acryloyl group concentration" means the number of moles of (meth)acryloyl groups (carbon-carbon double bond (C=C)) per 1 g of urethane (meth)acrylate (A). More specifically, it is a value (mmol/g) obtained by dividing the number of moles of (meth)acryloyl groups present in a urethane (meth)acrylate (A) by the mass of the urethane (meth)acrylate (A), which is a theoretical value calculated from the mass of raw materials used in manufacture of the urethane (meth)acrylate (A).

In an embodiment of the present invention, an active energy ray-curable ink (hereinafter also referred to as "ink") contains a urethane (meth)acrylate (A) and a (meth)acrylic compound (B) other than (A), wherein the (meth)acryloyl group concentration of the urethane (meth)acrylate (A) is within a range from 4.0 to 8.0 mmol/g.

When the (meth)acryloyl group concentration of the urethane (meth)acrylate (A) is within the range of 4.0 to 8.0 mmol/g, it is possible to have both excellent printability and curability. When the (meth)acryloyl group concentration is 4.0 mmol/g or more, deterioration of the curability of the ink can be controlled. When the (meth)acryloyl group concentration is 8.0 mmol/g or less, it is possible to control difficulty in introducing a structure that exhibits printability. In one embodiment, the (meth)acryloyl group concentration of the urethane (meth)acrylate (A) is preferably within a range from 4.5 to 7.5 mmol/g, and more preferably from 5.0 to 7.0 mmol/g.

In the active energy ray-curable ink according to the above embodiment, the amount contained of the urethane (meth)acrylate (A) is preferably within a range from 5% to 40% by mass, more preferably from 10% to 30% by mass, and even more preferably from 15% to 25% by mass, relative to the total amount of the ink, from the viewpoint of printability and curability.

An example of a preferred embodiment of the urethane (meth)acrylate (A) is a reaction product of a (meth)acrylic compound having one or more hydroxyl groups (a1), a polyol compound (a2) other than (a1), and an isocyanate compound (a3).

### ((Meth)acrylic compound having one or more hydroxyl groups (a1))

Examples of the (meth)acrylic compound having one or more hydroxyl groups (a1) include 2-hydroxyethyl (meth)acrylates, 2-hydroxypropyl (meth)acrylates, 2-hydroxybutyl (meth)acrylates, 4-hydroxybutyl (meth)acrylates, 2-hydroxy-3-phenoxypropyl (meth)acrylates, polyethylene glycol (meth)acrylates, caprolactone modified 2-hydroxyethyl (meth)acrylates, glycerol poly (meth)acrylates, diglycerol poly (meth)acrylates, trimethylolpropane poly (meth)acrylates, ditrimethylolpropane poly (meth)acrylates, pentaerythritol poly (meth)acrylates, dipentaerythritol poly (meth)acrylates, and polypentaerythritol poly (meth)acrylates.

These examples of the (meth)acrylic compound having one or more hydroxyl groups (a1) may be each used alone, or used in combination of two or more. Thereamong, it is preferable to use at least one selected from the group consisting of a pentaerythritol poly (meth)acrylate, a dipentaerythritol poly (meth)acrylate, and a polypentaerythritol poly (meth)acrylate, since the (meth)acryloyl group concentration of the urethane (meth)acrylate (A) is within a range from 4.0 to 8.0 mmol/g. Furthermore, it is preferable to use a dipentaerythritol poly (meth)acrylate from the viewpoint of ink fluidity.

### (Polyol compound (a2) other than (a1))

As the polyol compound (a2) other than (a1), a polyol compound having two or more hydroxyl groups per molecule can be used. The polyol compound (a2) preferably does not contain a polymerizable functional group, such as a (meth)acryloyl group. Preferably, as the polyol compound (a2), a polyol compound having 3 to 20 carbon atoms and an alkylene oxide modified product of a polyol compound having 3 to 20 carbon atoms can be used. The use of these improves printability of ink. In one embodiment, as the polyol compound (a2), more preferably, a polyol compound having a hydroxyl value within a range from 125 to 1,850 mg KOH/g can be used, and the use of the compound improves curability of ink. In one embodiment, the hydroxyl value of the above polyol compound may preferably be within a range from 200 to 1,850 mg KOH/g, more preferably from 300 to 1,850 mg KOH/g, and even more preferably from 400 to 1,850 mg KOH/g.

Specific examples of the polyol compound having 3 to 20 carbon atoms are as follows.

Examples of linear alkylene dihydric alcohols include 1,2-propanediols, 1,3-propanediols, 1,2-butanediols, 1,4-butanediols, 1,2-pentanediols, 1,5-pentanediols, 1,6-hexanediols, 1,2-hexanediols, 1,5-hexanediols, 2,5-hexanediols, 1,7-heptanediols, 1,8-octanediols, 1,2-octanediols, 1,9-nonanediols, 1,2-decanediols, 1,10-decanediols, 1,12-dodecanediols, 1,2-dodecanediols, 1,14-tetradecanediols, 1,2-tetradecanediols, 1,16-hexadecanediols, 1,2-hexadecanediols, 1,18-octadecanediols, 1,2-octadecanediols, 1,20-eicosanediols, and 1,2-eicosanediols.

Examples of branched alkylene dihydric alcohols include neopentyl glycols, 2-methyl-2,4-pentanediols, 3-methyl-1,5-pentanediols, 2-methyl-2-propyl-1,3-propanediols, 2, 4-dimethyl-2,4-dimethylpentanediols, 2,2-diethyl-1,3-propanediols, 2,2,4-trimethyl-1,3-pentanediols, dimethyloloctane, 2-ethyl-1,3-hexanediols, 2,5-dimethyl-2,5-hexanediols, 2-methyl-1,8-octanediols, 2-butyl-2-ethyl-1,3-propanediols, and 2,4-diethyl-1,5-pentanediols.

Examples of cyclic alkylene dihydric alcohols include 1,2-cyclohexanediols, 1,3-cyclohexanediols, 1,4-cyclohexanediols, 1,4-cyclohexanedimethanol, 1,2-cycloheptanediols, tricyclodecanedimethanol, bisphenol A, bisphenol F, bisphenol S, hydrogenated bisphenol A, hydrogenated bisphenol, and hydrogenated bisphenol S.

Examples of trivalent or higher polyhydric alcohols include glycerol, trimethylolethane, trimethylolpropane, pentaerythritol, diglycerol, ditrimethylolpropane, dipentaerythritol, trypentaerythritol, sorbitan, sorbitol, and inositol.

These polyol compounds having 3 to 20 carbon atoms may be each used alone or used in combination of two or more. Thereamong, particularly from the viewpoint of availability, it is preferable to use 1,2-propylene glycols, 1,4-butanediols, neopentyl glycols, 1,6-hexanediols, 1,8-octanediols, 1,10-decanediols, glycerol, trimethylolpropane, pentaerythritol, and the like.

Examples of an alkylene oxide modified product of a polyol compound having 3 to 20 carbon atoms include compounds obtained by performing alkylene oxide modification, such as ethylene oxide modification (EO modification), propylene oxide modification (PO modification), or butylene oxide modification (BO modification) on a polyol compound having 3 to 20 carbon atoms described above. The alkylene oxide modified products of the polyol compound having 3 to 20 carbon atoms may be each used alone, or used in combination of two or more.

Alkylene oxide modified products of a polyol compound having 3 to 20 carbon atoms are also available commercially. Examples include Sannix PP series (manufactured by Sanyo Chemical Industries, Ltd., polypropylene glycol), PTMG series (manufactured by Mitsubishi Chemical Group Corporation, polytetramethylene glycol), Uniox G series (manufactured by NOF CORPORATION, ethylene oxide modified glycerol), Sannix GP series (manufactured by Sanyo Chemical Industries, Ltd., propylene oxide modified glycerol), Sannix TP series (manufactured by Sanyo Chemical Industries, Ltd., propylene oxide modified trimethylolpropane), and WILBRIDE S-753D (manufactured by NOF CORPORATION, EOPOBO modified glycerol).

### (Isocyanate compound (a3))

There are no particular limitations on the isocyanate compound (a3), and any known compound having two or more isocyanate groups per molecule can be used. Examples include tolylene diisocyanate, 1,5-naphthylene diisocyanate, 4,4'-diphenylmethane diisocyanate, 4,4'-diphenyldimethylmethane diisocyanate, 4,4'-dibenzyl isocyanate, dialkyldiphenylmethane diisocyanate, tetraalkyldiphenylmethane diisocyanate, 1,3-phenylenediisocyanate, 1,4-phenylenediisocyanate, butane-1,4-diisocyanate, hexamethylene diisocyanate, isopropylene diisocyanate, 2,2,4-trimethylhexamethylene diisocyanate, 2,4,4-trimethylhexamethylene diisocyanate, cyclohexane-1,4-diisocyanate, xylylene diisocyanate, isophorone diisocyanate, lysine diisocyanate, dicyclohexylmethane-4,4'-diisocyanate, 1,3-bis(isocyanatomethyl)cyclohexane, methylcyclohexane diisocyanate, m-tetramethylxylylene diisocyanate, dimer diisocyanate where a carboxyl group of dimer acid is converted to an isocyanate group, and Millionate MR400 (manufactured by Tosoh Corporation, polymeric MDI).

Among these compounds, the isocyanate compound (a3) is preferably a diisocyanate compound from the point of reaction control. The diisocyanate compound may be an aliphatic diisocyanate compound or an aromatic diisocyanate compound. In one embodiment, the diisocyanate compound preferably contains at least one selected from the group consisting of 4,4'-diphenylmethane diisocyanate, toluene-2,4-diisocyanate, isophorone diisocyanate, and 1,6-hexamethylene diisocyanate.

### (Method of producing urethane (meth)acrylate (A))

In one embodiment, the urethane (meth)acrylate (A) preferably contains a reaction product of the (meth)acrylic compound having one or more hydroxyl groups (a1), the polyol compound (a2) other than (a1), and the isocyanate compound (a3). A method of producing such a reaction product will be described below.

Reactions of the (meth)acrylic compound having one or more hydroxyl groups (a1), the polyol compound (a2) other than (a1), and the isocyanate compound (a3) may be performed simultaneously. Alternatively, the polyol compound (a2) may be reacted after the (meth)acrylic compound having one or more hydroxyl groups (a1) and the isocyanate compound (a3) are reacted in advance. It is more preferable that the polyol compound (a2) be reacted after the (meth)acrylic compound having one or more hydroxyl groups (a1) and the isocyanate compound (a3) are reacted in advance since the (meth)acrylic compound having one or more hydroxyl groups (a1) can be reliably reacted with the polyol compound (a2) via the isocyanate compound (a3).

It is preferable that the ratio [(a1') / (a3')] of the number of moles (a1') in hydroxyl groups contained in the (meth)acrylic compound having one or more hydroxyl groups (a1) relative to the number of moles (a3') in isocyanate groups contained in the isocyanate compound (a3) be within a range from 0.2 to 0.6. When [(a1') / (a3')] is within the range from 0.2 to 0.6, the molecular weight of the urethane (meth)acrylate (A) falls in a suitable range, and printability can be easily improved.

The above reaction can proceed without a catalyst, but a catalyst can also be used. Examples of the catalyst, which can be used, include a tertiary amine-based catalyst such as triethylamine and dimethylaniline, and a metal-based catalyst such as tin, zinc, and aluminum. In one embodiment, it is preferable to use at least one selected from the group consisting of tin 2-ethylhexanoate, zinc acetylacetone, and aluminum acetylacetone from the viewpoint of reactivity.

The above reaction can be performed in a solvent as necessary, but a method of reacting in the (meth)acrylic compound (B) described below may be applied. This method is preferable because a step of dissolving the urethane (meth)acrylate (A) in a (meth)acrylic compound and a step of removing the solvent can be omitted.

The molecular weight of the urethane (meth)acrylate (A) is preferably within a range from 2,000 to 30,000 as a weight-average molecular weight from the viewpoint of printability. When the weight-average molecular weight is adjusted to 2,000 or more, a defect such as ink backing away tends to be easily controlled, which occurs due to poor ink fluidity. In contrast, when the weight-average molecular weight is adjusted to 30,000 or less, a defect such as ink mist tends to be easily controlled, which occurs due to strong interaction between high molecular weight components in ink. In one embodiment, the weight-average molecular weight may be more preferably within a range from 2,000 to 20,000, and even more preferably within a range from 3,000 to 15,000.

Note that in the description, the weight-average molecular weight is a value measured using gel permeation chromatography (HLC-8320) manufactured by Tosoh Corporation. As specific conditions, a calibration curve was prepared using a standard polystyrene sample. An eluent was tetrahydrofuran, and three tubes of TSKgel SuperHM-M (manufactured by Tosoh Corporation) were used for a column. Measurement was performed at a flow rate of 0.6 ml/min, an injection volume of 10 µl, and a column temperature of 40°C.

The number of (meth)acryloyl groups contained in the urethane (meth)acrylate (A) is preferably within a range from 4 to 50 per molecule, and more preferably from 7 to 30 per molecule, from the viewpoint of printability and curability.

### (Meth)acrylic compound (B)

The amount contained of the (meth)acrylic compound (B) used in the ink of the above embodiment may be within a range from 10% to 90% by mass, more preferably from 20% to 85% by mass, and even more preferably 30% to 80% by mass, relative to the total amount of the ink.

There are no particular limitations on the (meth)acrylic compound (B). Specific examples of a compound that can be used as the (meth)acrylate compound (B) include the following.

Monofunctional (meth)acrylic compounds such as methyl (meth)acrylates, ethyl (meth)acrylates, propyl (meth)acrylates, butyl (meth)acrylates, hexyl (meth)acrylates, octyl (meth)acrylates, 2-ethylhexyl (meth)acrylates, methoxydiethylene glycol (meth)acrylates, methoxydipropylene glycol (meth)acrylates, phenoxyethyl (meth)acrylates, 2-(2-vinyloxyethoxy) ethyl (meth)acrylates, and acryloylmorpholine.

Difunctional (meth)acrylic compounds such as ethylene glycol di(meth)acrylates, polyethylene glycol di(meth)acrylates (n = 2 to 20), propylene glycol di(meth)acrylates, polypropylene glycol di(meth)acrylates (n = 2 to 20), alkane (number of carbon atoms 4 to 12) glycol di(meth)acrylates, alkane (number of carbon atoms 4 to 12) glycol ethylene oxide adduct (2 to 20 mols) di(meth)acrylates, alkane (number of carbon atoms 4 to 12) glycol propylene oxide adduct (2 to 20 mols) di(meth)acrylates, hydroxypivalyl hydroxypivalate di(meth)acrylates, tricyclodecanedimethylol di(meth)acrylates, bisphenol A ethylene oxide adduct (2 to 20 mols) di(meth)acrylates, hydrogenated bisphenol A di(meth)acrylates, and hydrogenated bisphenol A ethylene oxide adduct (2 to 20 mols) di(meth)acrylates.

Trifunctional (meth)acrylic compounds such as glycerol tri(meth)acrylates, glycerol ethylene oxide adduct (3 to 30 mols) tri(meth)acrylates, glycerol propylene oxide adduct (3 to 30 mols) tri(meth)acrylates, trimethylolpropane (meth)acrylates, trimethylolpropane ethylene oxide adduct (3 to 30 mols) tri(meth)acrylates, and trimethylolpropane propylene oxide adduct (3 to 30 mols) tri(meth)acrylates.

Tetrafunctional or higher (meth)acrylic compounds such as pentaerythritol tetra(meth)acrylates, pentaerythritol ethylene oxide adduct (4 to 40 mols) tetra(meth)acrylates, pentaerythritol propylene oxide adduct (4 to 40 mols) tetra(meth)acrylates, diglycerol tetra(meth)acrylates, ditrimethylolpropane tetra(meth)acrylates, ditrimethylolpropane ethylene oxide adduct (4 to 40 mols) tetra(meth)acrylates, ditrimethylolpropane propylene oxide adduct (4 to 40 mols) tetra(meth)acrylates, dipentaerythritol hexa (meth)acrylates, dipentaerythritol ethylene oxide adduct (6 to 60 mols) hexa(meth)acrylates, and dipentaerythritol propylene oxide adduct (6 to 60 mols) hexa(meth)acrylates.

In addition, polyester (meth)acrylates, urethane (meth)acrylates other than the urethane (meth)acrylate (A) (i.e., different from (A)), epoxy (meth)acrylates, and the like.

As the (meth)acrylic compound (B), one of the above compounds may be used alone, or two or more may be used in combination. In one embodiment, it is preferable to use a difunctional or higher (meth)acrylic compound from the viewpoint of curability. The percentage of the difunctional or higher (meth)acrylic compound in the total amount of the (meth)acrylic compound (B) is preferably within a range from 40% to 100% by mass, more preferably from 60% to 100% by mass, and even more preferably from 90% to 100% by mass, from the viewpoint of curability. In one embodiment, the percentage of a tetrafunctional or higher (meth)acrylic compound in the total amount of the (meth)acrylic compound (B) is preferably within a range from 10% to 100% by mass, and more preferably 30% to 100% by mass, from the viewpoint of curability.

The active energy ray-curable ink according to the present invention can use an active energy ray-curable compound other than the (meth)acrylic compound (B), depending on required physical properties of a cured film.

As the active energy ray-curable compound other than the (B) (that is, different from (B)), a vinyl compound can be used, for example. Specific examples include styrene, N-vinylpyrrolidone, and divinylbenzene.

In one embodiment, a colored pigment can be added as a colorant to the active energy ray-curable ink, and when the colored pigment is included, the ink becomes a colored ink. In contrast, when the colored pigment is not included, the ink becomes a clear ink (also called varnish). In one embodiment, the clear ink may include an extender pigment that has no coloring power. In one embodiment, the colored ink may include a colored pigment and an extender pigment.

The colored pigment may be either an inorganic pigment or an organic pigment, and various known pigments may be used.

Examples of the inorganic pigment include yellow lead, zinc yellow, dark blue, barium sulfate, cadmium red, titanium oxide, zinc oxide, red iron oxide, ultramarine, carbon black, graphite, aluminum powder, and Bengara.

Examples of the organic pigment include: soluble azo pigments such as β-naphthol-based, β-oxynaphthoic acid-based, β-oxynaphthoic acid-based anilide-based, acetoacetic acid anilide-based, and pyrazolone-based; insoluble azo pigments such as β-naphthol-based, β-oxynaphthoic acid-based anilide-based, acetoacetic acid anilide-based monoazo, acetoacetic acid anilide-based disazo, and pyrazolone-based; phthalocyanine-based pigments such as copper phthalocyanine blue, halogenated (chlorinated or brominated) copper phthalocyanine blue, sulfonated copper phthalocyanine blue, and metal-free phthalocyanine; and polycyclic pigments and heterocyclic pigments such as quinacridone-based, dioxazine-based, threne-based (pyrantrone, anthantrone, indantrone, anthrapyrimidine, flavantrone, thioindigo-based, anthraquinone-based, perinone-based, perylene-based, etc.), isoindolinone-based, metal complex-based, and quinophthalone-based.

In one embodiment, the active energy ray-curable ink may include an extender pigment that has no coloring power. When the extender pigment is used, viscosity adjustment of the ink tends to be easier. Examples of the extender pigment include barium sulfate, magnesium silicate, alumina white, calcium carbonate, magnesium carbonate, aluminum silicate, magnesium silicate, silicon dioxide, and aluminum hydroxide.

In one embodiment, the active energy ray-curable ink may include a resin as necessary.

There are no particular limitations on a resin that can be used. Examples include allyl resins such as diallyl orthophthalate resins, diallyl isophthalate resins, and diallyl terephthalate resins, polyester resins, polyvinyl chloride, poly (meth)acrylic acid esters, epoxy resins, polyurethane resins, petroleum (based) resins, cellulose derivatives (e.g., ethylcellulose, cellulose acetate, nitrocellulose), vinyl chloride vinyl acetate copolymers, polyamide resins, polyvinyl acetal resins, polyamide resins, polyvinyl acetal resins, and butadiene-acrylonitrile copolymers. In one embodiment, a non-phthalate type allyl resin that does not contain a phthalate structure may be used as an allyl resin. These resins may be used alone or in combination of two or more.

In one embodiment, the active energy ray-curable ink may include a photopolymerization initiator as necessary. Examples of the photopolymerization initiator include photocleavable initiators and hydrogen abstraction type polymerization initiators.

Examples of photocleavable initiators include acetophenone-based compounds and acylphosphine oxide-based compounds.

More specifically, examples of acetophenone-based compounds include 2,2-dimethoxy-2-phenylacetophenone, 2-hydroxy-2-methylpropiophenone, 1-hydroxycyclohexyl phenyl ketone, 2-methyl-1-[4-(methylthio)phenyl]-2-morpholino-1-propanone, 2-benzyl-2-(dimethylamino)-1-[4-(morpholino)phenyl]-1-butanone, and 2-(dimethylamino)-2-(4-methylbenzyl)-1-[4-(morpholino)phenyl]-1-butanone. Examples of the acylphosphine oxide-based compounds include diphenyl(2,4,6-trimethylbenzoyl)phosphine oxide, phenyl bis(2,4,6-trimethylbenzoyl)phosphine oxide, and ethylphenyl(2,4,6-trimethylbenzoyl)phosphinate. These compounds may be used alone or in combination of two or more.

Furthermore, dialkylaminobenzophenone compounds and thioxanthone compounds may be used as hydrogen abstraction type polymerization initiators.

More specifically, examples of dialkylaminobenzophenone compounds include 4,4'-bis-(dimethylamino)benzophenone, 4,4'-dialkylaminobenzophenones such as 4,4'-bis-(diethylamino)benzophenone, and 4-benzoyl-4'-methyldiphenyl sulfide. The dialkylaminobenzophenone compounds may be used alone or in combination of two or more.

Examples of thioxanthone compounds include 2,4-diethylthioxanthone, 2,4-dimethylthioxanthone, 2,4-diisopropylthioxanthone, 2-isopropylthioxanthone, 4-diisopropylthioxanthone, 2-isopropylthioxanthone, 4-isopropylthioxanthone, 2,4-dichlorothioxanthone, 2-chlorothioxanthone, 1-chloro-4-propoxythioxanthone, and 2-hydroxy-3-(3,4-dimethyl-9-oxo-9H thioxanthone-2-iloxy-N,N,N-trimethyl-1-propanamine hydrochloride. These may be used alone or in combination of two or more.

Examples of sensitizers include benzophenone, 4-methyl-benzophenone, 2,4,6-trimethylbenzophenone, 2,3,4-trimethylbenzophenone, 4-phenylbenzophenone, 3,3'-dimethyl-4-methoxybenzophenone, 4-(1,3-acryloyl-1,4,7,10,13-pentaoxotridecyl)benzophenone, methyl-o-benzoylbenzoate, [4-(methylphenylthio)phenyl]phenylmethanone, (4-benzoylbenzyl)trimethylammonium chloride, 2-hydroxy-2-methyl-1-phenylpropane-1-one, 1-(4-isopropylphenyl)2-hydroxy-2-methyl-1-phenylpropane-1-one, 1-hydroxy-cyclohexyl-phenyl ketone, 2-hydroxy-2-methyl-1-styrylpropane-1-one polymers, diethoxyacetophenone, dibutoxyacetophenone, benzoin methyl ether, benzoin ethyl ether, benzoin isopropyl ether, benzoin isobutyl ether, and benzoin normal butyl ether.These compounds may be used alone or in combination of two or more.

Other additives can be used as necessary in the active energy ray-curable ink according to the present invention.

A radical polymerization inhibitor can be added as an additive for imparting storage stability to the ink.

Examples of the radical polymerization inhibitor include (alkyl)phenols, hydroquinone, catechol, resorcinol, p-methoxyphenol, t-butylcatechol, t-butylhydroquinone, pyrogallol, 1,1-picrylhydrazyl, phenothiazine, p-benzoquinone, nitrosobenzene, 2,5-di-tert-butyl-p-benzoquinone, dithiobenzoyl disulfide, picric acid, cupferron, aluminum N-nitrosophenylhydroxylamine, tri-p-nitrophenylmethyl, N-(3-oxyanilino-1,3-dimethylbutylidene)aniline oxide, dibutylcresol, cyclohexanone oxime cresol, guajacol, o-isopropylphenol, butyraldoxime, methyl ethyl ketoxime, and cyclohexanone oxime.

A wax can be added as an additive for imparting friction resistance, blocking resistance, slipperiness, and anti-scratch properties.

Examples of the wax include natural waxes such as carnauba waxes, wood waxes, lanolin, montan waxes, paraffin waxes, microcrystalline waxes, and synthetic waxes such as Fischer trops waxes, polyethylene waxes, polypropylene waxes, polytetrafluoroethylene waxes, polyamide waxes, and silicone compounds.

In addition, additives such as ultraviolet absorbers, infrared absorbers, and antibacterial agents may be added to the active energy ray-curable ink according to required performances.

The active energy ray-curable ink according to the above embodiment may have a composition including 0% to 30% by mass of a pigment, 5% to 40% by mass of the urethane (meth)acrylate (A), 20% to 80% by mass of the (meth)acrylic compound (B), 0% to 30% by mass of a resin, 0% to 20% by mass of a photopolymerization initiator and/or a sensitizer, and 0% to 10% by mass of other additives, relative to the total of the ink, and can be adjusted by blending a predetermined amount of a raw material.

In printing inks, organic solvents are generally used as viscosity modifiers. However, use of organic solvents has become restricted from the viewpoint of environmental impact and work safety.

In contrast, it is preferable that the active energy ray-curable ink according to the above-described embodiment substantially contain no organic solvents. Since it contains substantially no organic solvents and thus does not contain any volatile components (Non-VOC), it is possible to provide an active energy ray-curable ink having low environmental impact and excellent work safety. Here, "substantially contain no ..." means that there is no intentional addition as a constituent, and the amount contained due to unintentional addition is less than 1% by mass. The unintentional addition corresponds to a case of a small amount contained in each raw material, a case of a small amount contained as contamination in an ink manufacturing process and a printed item manufacturing process, and the like.

The active energy ray-curable ink according to the above embodiment can be produced by applying a similar method as used for the conventional active energy ray-curable ink. For example, production is possible by kneading and mixing ink composition components containing raw materials such as a pigment described above, the urethane (meth)acrylate (A), the (meth)acrylic compound (B), a polymerization inhibitor, a photopolymerization initiator and a sensitizer, and other additives using a preparation machine, such as a kneader, three-roll roll, attriter, Sandoz mill, or gate mixer, at a temperature between room temperature and 100°C.

In one embodiment, the method of producing the above-described active energy ray-curable ink may include a step of preparing the urethane (meth)acrylate (A). For example, the above production method may include a step of reacting the (meth)acrylic compound having one or more hydroxyl groups (a1), the polyol compound (a2) which is other than the (a1), and the isocyanate compound (a3) to obtain the urethane (meth)acrylate (A). In one embodiment, the above-described reaction is preferably performed in the presence of the (meth)acrylic compound (B) forming the ink. The (meth)acrylic compound (B) is as described above.

An embodiment of the present invention relates to a printed item having a substrate and a printing layer provided on at least one main surface of the substrate, wherein the printing layer is formed from a cured product of the active energy ray-curable ink according to the above embodiment. The printed item can be produced using a known method including, for example, printing (applying) the active energy ray-curable ink according to the above embodiment on at least one surface of the substrate to form a coating film, and irradiating the coating film with an active energy ray to harden the coating film.

In the method of producing the printed item, there are no particular limitations on the method of printing or applying the active energy ray-curable ink on the substrate. Examples of applicable methods include roll coaters, gravure coaters, flexo coaters, air doctor coaters, blade coaters, air knife coaters, squeeze coaters, impregnated coaters, transfer roll coaters, kiss coaters, curtain coaters, cast coaters, spray coaters, die coaters, offset printing, flexo printing, gravure printing, and screen printing. In one embodiment, offset printing is preferable. The offset printing may be either normal offset printing using dampening water, or offset printing without dampening water.

There are no particular limitations on the substrate of the printed item, and examples include printing on any materials such as paper, plastic, seals, labels, and metal. In one embodiment, a printed item may be preferably obtained by printing ink on a paper substrate.

In the method of producing a printed item, there are no particular limitations on the method of curing the ink with an active energy ray, and any known active energy ray source may be used. Specific examples include mercury lamps, xenon lamps, metal hydride lamps, LEDs (light emitting diode) such as ultraviolet light emitting diodes (UV-LEDs) and ultraviolet laser diodes (UV-LDs), electron beams, gas, and solid-state lasers.

### EXAMPLES

Hereinafter, the present invention will be described in more detail using examples, but the following examples do not limit the scope of the invention in any way. Note that in the present invention, "parts" represents "parts by mass", and "%" represents "% by mass".

### (Production example 1)

In a four-neck flask equipped with a stirrer, a cooler, a thermometer, and a gas inlet pipe, 70.9 parts of MIRAMER M500 as the (meth)acrylic compound having one or more hydroxyl groups (a1) (mixture with the (meth)acrylic compound (B) component described below), 11.8 parts of toluene-2,4-diisocyanate as the isocyanate compound (a3), 9.6 parts of MIRAMER M600 and 5.0 parts of LAROMER LR8863 as the (meth)acrylic compound (B), 0.01 parts of tin 2-ethylhexanoate as a catalyst, and 0.2 parts of tertiary butylhydroquinone as a polymerization inhibitor were placed, air was blown into the flask while stirring, and the reaction was performed at 100°C for 1 hour.

Then, 2.6 parts of a propylene glycol was added as the polyol compound (a2) which is other than the (a1), and the reaction was performed at 110°C for 5 hours to obtain a resin composition 1 including a urethane acrylate.

The value of [(al') / (a3')] in this reaction was 0.5, and the (meth)acrylic group concentration of the urethane acrylate obtained was 6.79 mmol/g.

### (Production examples 2 to 30, 33 to 38, and 40)

According to compositions of Table 1, resin compositions 2 to 30, 33 to 38, and 40 were obtained in the same manner as in production example 1, except that raw materials were each changed.

### (Production example 31)

In a four-neck flask equipped with a stirrer, a cooler, a thermometer, and a gas inlet pipe, 71.6 parts of MIRAMER M500 as the (meth)acrylic compound having one or more hydroxyl groups (a1) (mixture with a (meth)acrylic compound (B) described below), 2.1 parts of glycerol as the polyol compound (a2) other than (a1), 11.9 parts of toluene-2,4-diisocyanate as the isocyanate compound (a3), 9.2 parts of MIRAMER M600 and 5.0 parts of LAROMER LR8863 as the (meth)acrylic compound (B), 0.01 parts of tin 2-ethylhexanoate as a catalyst, and 0.2 parts of tertiary butylhydroquinone as a polymerization inhibitor were placed, air was blown into the flask while stirring, and the reaction was performed at 110°C for 5 hours to obtain a resin composition 31 containing a urethane acrylate.

The value of [(al') / (a3')] in this reaction was 0.5, and the (meth)acrylic group concentration of the urethane acrylate obtained was 6.86 mmol/g.

### (Production example 32)

According to compositions of Table 1, a resin composition 32 was obtained in the same manner as in production example 31 except that raw materials were each changed.

### (Production example 39)

In a four-neck flask equipped with a stirrer, a cooler, a thermometer, and a gas inlet pipe, 92.1 parts of MIRAMER M500 as the (meth)acrylic compound having one or more hydroxyl groups (a1) (mixture with a (meth)acrylic compound (B) component), 7.7 parts of toluene-2,4-diisocyanate as the isocyanate compound (a3), 0.01 parts of tin 2-ethylhexanoate as a catalyst, and 0.2 parts of tertiary butylhydroquinone as a polymerization inhibitor were placed, air was blown into the flask while stirring, and the reaction was performed at 100°C for 5 hours to obtain a resin composition 39 containing a urethane acrylate.

The value of [(al') / (a3')] in this reaction was 1.0, and the (meth)acrylic group concentration of the urethane acrylate obtained was 8.18 mmol/g.

### [Table 1]

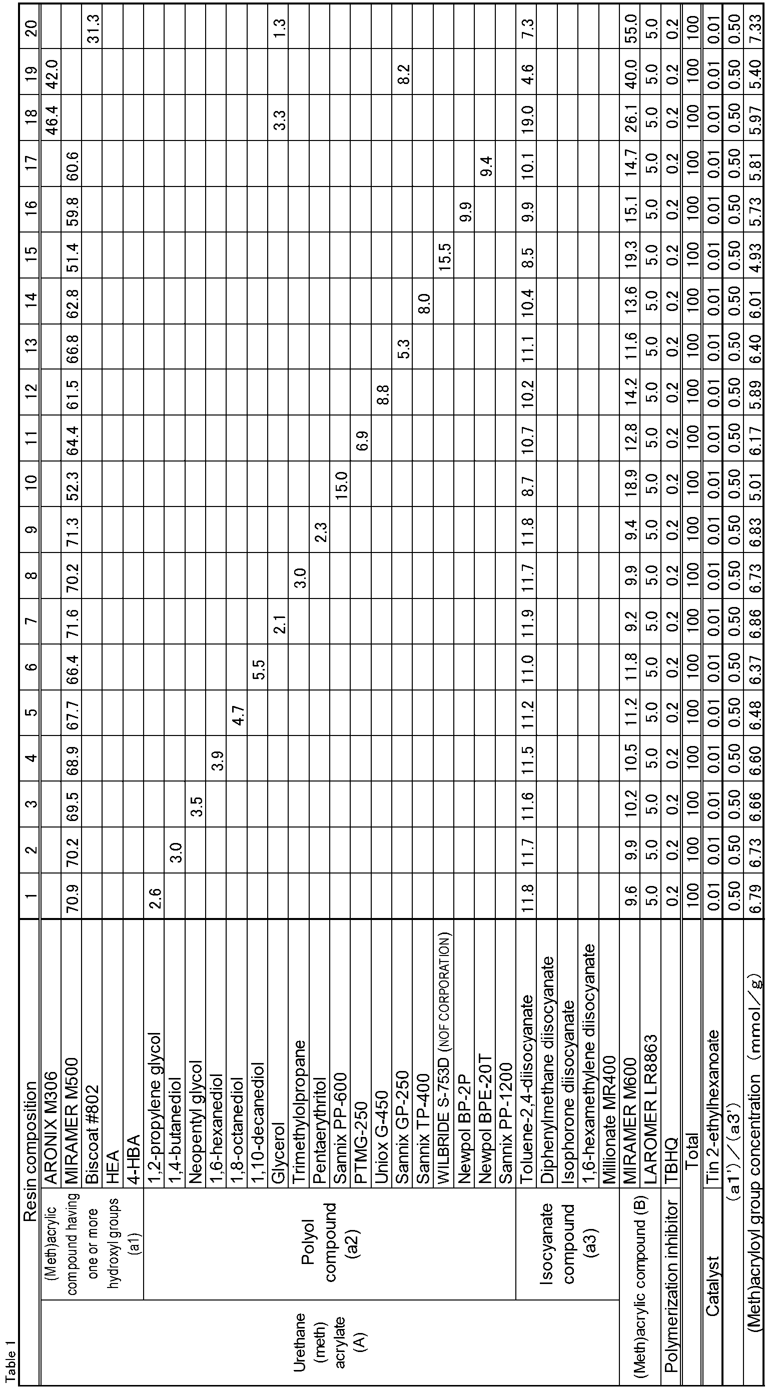

### [Table 1 -1]

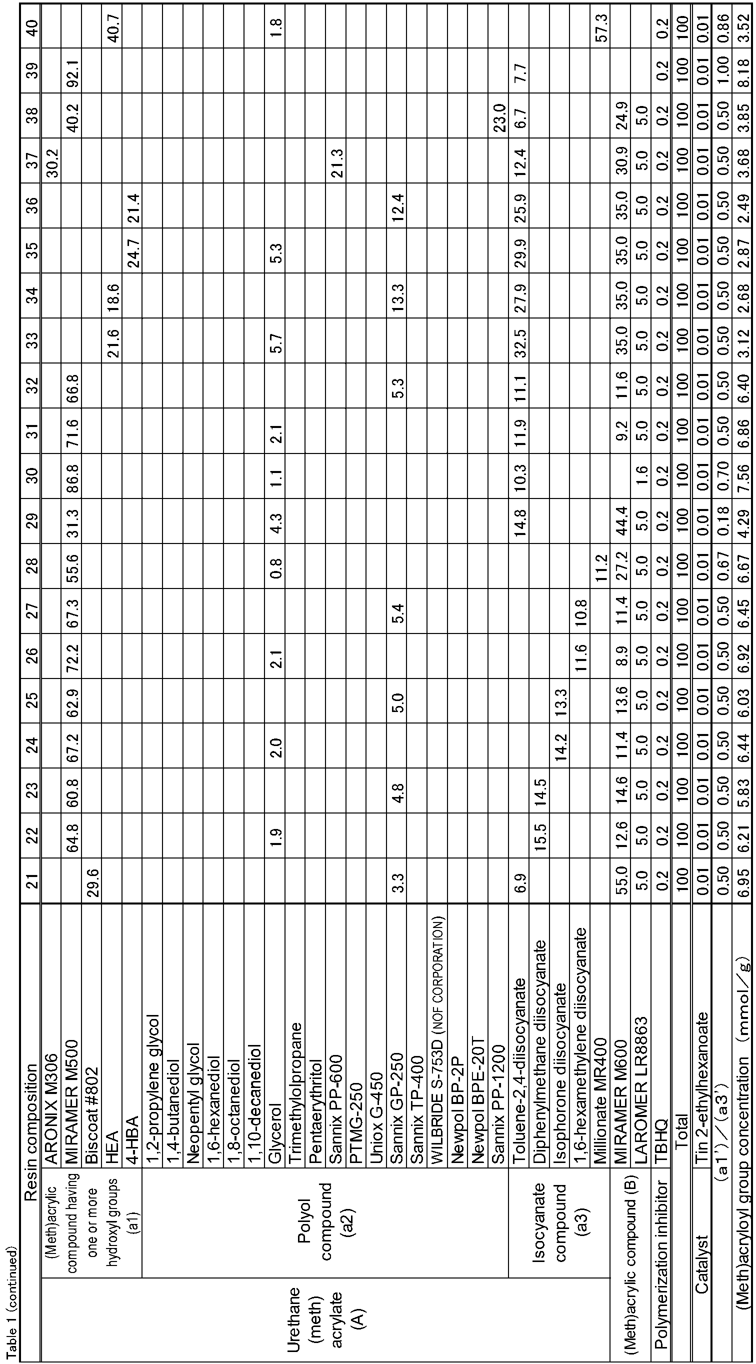

Details of materials listed in Table 1 are given below.
· (Meth)acrylic compound (a1)
   ARONIX M306: manufactured by TOAGOSEI CO., LTD., a mixture of pentaerythritol triacrylate / pentaerythritol tetraacrylate = 70/30 (mass ratio)
   MIRAMER M500: manufactured by Miwon Specialty Chemical Co., Ltd., a mixture of dipentaerythritol pentacrylate / dipentaerythritol hexaacrylate = 50/50 (mass ratio)
   Biscoat #802: polypentaerythritol polyacrylate manufactured by OSAKA ORGANIC CHEMICAL INDUSTRY LTD.
   HEA: manufactured by OSAKA ORGANIC CHEMICAL INDUSTRY LTD., 2-hydroxyethyl acrylate
   4-HBA: manufactured by OSAKA ORGANIC CHEMICAL INDUSTRY LTD., 4-hydroxybutyl acrylate
· Polyol compound (a2)
   SANNIX PP-600: manufactured by Sanyo Chemical Industries, Ltd., polypropylene glycol
   PTMG-250: manufactured by Mitsubishi Chemical Group Corporation, polytetramethylene glycol
   Uniox G-450: manufactured by NOF CORPORATION, ethylene oxide modified glycerol
   Sannix GP-250: manufactured by Sanyo Chemical Industries, Ltd., propylene oxide modified glycerol
   Sannix TP-400: manufactured by Sanyo Chemical Industries, Ltd., propylene oxide modified trimethylolpropane
   WILBRIDE S-753D: manufactured by NOF CORPORATION, EOPOBO modified glycerol
   Newpol BP-2P: manufactured by Sanyo Chemical Industries, Ltd., propylene oxide modified bisphenol A
   Newpol BPE-20T: manufactured by Sanyo Chemical Industries, Ltd., ethylene oxide modified bisphenol A
   SANNIX PP-1200: manufactured by Sanyo Chemical Industries, Ltd., polypropylene glycol
· Isocyanate compound (a3)
   Millionate MR400: manufactured by Tosoh Corporation, polymeric MDI (diphenylmethane diisocyanate)
· (Meth)acrylic compound (B)
   MIRAMER M600: manufactured by Miwon Specialty Chemical Co., Ltd., dipentaerythritol hexaacrylate
   LAROMER LR8863: manufactured by BASF, ethylene oxide modified trimethylolpropane triacrylate
· Polymerization inhibitor
   TBHQ: tertiary butyl hydroquinone

### (Examples 1 to 34 and comparative examples 1 to 8)

Using resin compositions 1 to 40 containing the urethane acrylate prepared previously, raw materials were each mixed according to compositions listed in Table 2, and kneaded in a three-roll mill to obtain active energy ray-curable inks of examples 1 to 34, and comparative examples 1 to 8. As a method of evaluating printability of the obtained active energy ray-curable inks, "ink mist" and "ink backing away" on a printing machine were examined. As a method of evaluating curability, "wet heat blocking" of printed items was examined. The results are listed in Table 2.

### <Method of measuring ink mist>

An offset sheet-fed printing press, LITHRONE L426 (Komori Corporation), was used for printing at a speed of 10,000 sheets per hour under the following conditions. When printing, a blank sheet of paper was attached to the inside of a safety cover of the printing machine. After 10,000 sheets of paper were passed through, the blank sheet was taken out, and the degree of ink scattering was evaluated. "A", "B", and "C" are practical levels.

### (Evaluation criteria)

A: small amount of ink mist scattered on part of the blank sheet
B: thin ink mist scattered all over the blank sheet
C: slightly thick ink mist scattered all over the blank sheet
D: thick ink mist scattered all over the blank sheet

### (Printing conditions)

Printing press: LITHRONE26 (Komori Corporation)
Paper: manufactured by Oji Paper Co., Ltd., OK Top Coat+ (79.1 g/m²)
Printing speed: 10,000 sheets/hour
Lamp: metal halide lamp (output 120 W/cm, 1 lamp used)

### <Method of evaluating ink backing away >

In the same printing process as above, occurrence of the "ink backing away (ink escape)" issue where ink is not scraped off by a supply roller from the ink fountain. "A", "B", and "C" are practical levels.

### (Evaluation criteria)

A: no trouble occurs for 60 minutes or more
B: trouble occurs at or after 30 minutes, but before 60 minutes
C: trouble occurs at or after 10 minutes, but before 30 minutes
D: trouble occurs before 10 minutes

### <Evaluation method of wet heat blocking>

Colorization (printing) was performed on coated paper (manufactured by Oji Paper Co., Ltd., OK Top Coat plus) using an RI tester (simple colorizer) at a coating amount of 1 g/m². The ink printing surface of the coated paper was irradiated with a metal halide lamp (manufactured by IWASAKI ELECTRIC CO., LTD. EYE GRAPHICS COMPANY) to harden the ink and obtain a printed item. The irradiation conditions were output: 96 W/cm, lamp distance: 10 cm, and irradiation time was adjusted by changing conveyor speed (80, 100, 120 m/min).

Next, the printed item was cut into 4 cm × 5 cm squares, and test pieces are prepared. Ink printed surfaces of test specimens were overlapped and blocked under the following conditions: temperature: 40°C, humidity: 80%RH, load: 2 kg/cm², time: 24 hours, and then condition of the printed items was evaluated. Evaluation criteria are as follows. "A", "B", and "C" are practical levels.

### (Evaluation criteria)

A: no change in printing surface
B: peeling is observed on part of printing surface (less than 10% of the area)
C: peeling is observed on part of printing surface (10% or more and less than 50% of the area)
D: peeling is observed on part or all of printing surface (50% or more of the area)

**Table 2**

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Number of resin composition used | | | 1 | 2 | 3 | 4 | 5 | 6 | 7 | 8 | 9 | 10 |
| Raw materials | Resin composition | | 40 | 40 | 40 | 40 | 40 | 40 | 40 | 40 | 40 | 40 |
| | (Meth)acrylic compound (B) | MIRAMER M600 | 15 | 15 | 15 | 15 | 15 | 15 | 15 | 15 | 15 | 15 |
| | | LAROMER LR8863 | 20 | 20 | 20 | 20 | 20 | 20 | 20 | 20 | 20 | 20 |
| | Pigment | Carbon black | 15 | 15 | 15 | 15 | 15 | 15 | 15 | 15 | 15 | 15 |
| | Photopolymerization initiator | Omnirad379EG | 5 | 5 | 5 | 5 | 5 | 5 | 5 | 5 | 5 | 5 |
| | | KAYACURE DETX-S | 5 | 5 | 5 | 5 | 5 | 5 | 5 | 5 | 5 | 5 |
| | Total | | 100 | 100 | 100 | 100 | 100 | 100 | 100 | 100 | 100 | 100 |
| Amount contained of urethane acrylate in ink (% by mass) | | | 20 | 20 | 20 | 20 | 20 | 20 | 20 | 20 | 20 | 20 |
| Evaluation | Ink mist | | A | A | A | A | A | A | A | A | A | A |
| | Ink backing away | | A | B | A | A | B | A | A | A | B | A |
| | Wet heat blocking | 60 m/min | A | A | A | A | A | A | A | A | A | A |
| | | 80 m/min | A | A | A | A | A | A | A | A | A | B |
| | | 100 m/min | B | B | A | A | A | B | A | A | A | B |

**[Table 2-1]**

| Table 2 (continued 1) | | | | | | | | | | | | |
|---|---|---|---|---|---|---|---|---|---|---|---|---|
| | | | Example 11 | Example 12 | Example 13 | Example 14 | Example 15 | Example 16 | Example 17 | Example 18 | Example 19 | Example 20 |
| Number of resin composition used | | | 11 | 12 | 13 | 14 | 15 | 16 | 17 | 18 | 19 | 20 |
| Raw materials | Resin composition | | 40 | 40 | 40 | 40 | 40 | 40 | 40 | 40 | 40 | 40 |
| | (Meth)acrylic compound (B) | MIRAMER M600 | 15 | 15 | 15 | 15 | 15 | 15 | 15 | 15 | 15 | 15 |
| | | LAROMER LR8863 | 20 | 20 | 20 | 20 | 20 | 20 | 20 | 20 | 20 | 20 |
| | Pigment | Carbon black | 15 | 15 | 15 | 15 | 15 | 15 | 15 | 15 | 15 | 15 |
| | Photopolymerization initiator | Omnirad379EG | 5 | 5 | 5 | 5 | 5 | 5 | 5 | 5 | 5 | 5 |
| | | KAYACURE DETX-S | 5 | 5 | 5 | 5 | 5 | 5 | 5 | 5 | 5 | 5 |
| | Total | | 100 | 100 | 100 | 100 | 100 | 100 | 100 | 100 | 100 | 100 |
| Amount contained of urethane acrylate in ink (% by mass) | | | 20 | 20 | 20 | 20 | 20 | 20 | 20 | 22 | 17 | 16 |
| Evaluation | Ink mist | | A | A | A | A | A | A | A | A | A | A |
| | Ink backing away | | B | B | A | A | B | c | c | A | A | A |
| | Wet heat blocking | 60 m/min | A | A | A | A | A | A | A | A | A | A |
| | | 80 m/min | A | A | A | A | B | A | A | B | B | A |
| | | 100 m/min | A | B | A | B | B | A | A | c | c | A |

**[Table 2-2]**

| Table 2 (continued 2) | | | | | | | | | | | | | |
|---|---|---|---|---|---|---|---|---|---|---|---|---|---|
| | | | Example 21 | Example 22 | Example 23 | Example 24 | Example 25 | Example 26 | Example 27 | Example 28 | Example 29 | Example 30 | Example 31 |
| Number of resin composition used | | | 21 | 22 | 23 | 24 | 25 | 26 | 27 | 28 | 29 | 30 | 13 |
| Raw materials | Resin composition | | 40 | 40 | 40 | 40 | 40 | 40 | 40 | 40 | 40 | 40 | 15 |
| | (Meth)acrylic compound (B) | MIRAMER M600 | 15 | 15 | 15 | 15 | 15 | 15 | 15 | 15 | 15 | 15 | 35 |
| | | LAROMER LR8863 | 20 | 20 | 20 | 20 | 20 | 20 | 20 | 20 | 20 | 20 | 25 |
| | Pigment | Carbon black | 15 | 15 | 15 | 15 | 15 | 15 | 15 | 15 | 15 | 15 | 15 |
| | Photopolymerization initiator | Omnirad379EG | 5 | 5 | 5 | 5 | 5 | 5 | 5 | 5 | 5 | 5 | 5 |
| | | KAYACURE DETX-S | 5 | 5 | 5 | 5 | 5 | 5 | 5 | 5 | 5 | 5 | 5 |
| | Total | | 100 | 100 | 100 | 100 | 100 | 100 | 100 | 100 | 100 | 100 | 100 |
| Amount contained of urethane acrylate in ink (% by mass) | | | 16 | 20 | 20 | 20 | 20 | 20 | 20 | 16 | 14 | 22 | 7 |
| Evaluation | Ink mist | | A | A | A | B | B | A | A | c | c | B | B |
| | Ink backing away | | B | B | A | B | B | A | A | B | A | c | c |
| | Wet heat blocking | 80 m/min | A | A | A | A | A | A | A | A | B | A | A |
| | | 100 m/min | A | A | A | A | A | A | A | A | B | A | A |
| | | 120 m/min | A | B | B | A | A | B | B | A | c | B | A |

**[Table 2-3]**

| Table 2 (continued 3) | | | | | | | | | | | | | |
|---|---|---|---|---|---|---|---|---|---|---|---|---|---|
| | | | Example 32 | Example 33 | Example 34 | Comparative example 1 | Comparative example 2 | Comparative example 3 | Comparative example 4 | Comparative example 5 | Comparative example 6 | Comparative example 7 | Comparative example 8 |
| Number of resin composition used | | | 13 | 31 | 32 | 33 | 34 | 35 | 36 | 37 | 38 | 39 | 40 |
| Raw materials | Resin composition | | 60 | 40 | 40 | 40 | 40 | 40 | 40 | 40 | 40 | 40 | 40 |
| | (Meth)acrylic compound (B) | MIRAMER M600 | 5 | 15 | 15 | 15 | 15 | 15 | 15 | 15 | 15 | 15 | 15 |
| | | LAROMER LR8863 | 10 | 20 | 20 | 20 | 20 | 20 | 20 | 20 | 20 | 20 | 20 |
| | Pigment | Carbon black | 15 | 15 | 15 | 15 | 15 | 15 | 15 | 15 | 15 | 15 | 15 |
| | Photopolymerization initiator | Omnirad379EG | 5 | 5 | 5 | 5 | 5 | 5 | 5 | 5 | 5 | 5 | 5 |
| | | KAYACURE DETX-S | 5 | 5 | 5 | 5 | 5 | 5 | 5 | 5 | 5 | 5 | 5 |
| | Total | | 100 | 100 | 100 | 100 | 100 | 100 | 100 | 100 | 100 | 100 | 100 |
| Amount contained of urethane acrylate in ink (% by mass) | | | 30 | 20 | 20 | 24 | 24 | 24 | 24 | 22 | 20 | 22 | 40 |
| Evaluation | Ink mist | | c | B | c | B | B | B | B | A | A | D | D |
| | Ink backing away | | B | c | c | D | D | D | D | B | B | D | B |
| | Wet heat blocking | 80 m/min | A | A | A | D | D | D | D | c | c | A | c |
| | | 100 m/min | A | A | A | D | D | D | D | D | D | A | D |
| | | 120 m/min | A | B | B | D | D | D | D | D | D | A | D |

Details of materials listed in Table 2 are given below.
· Pigment
   Carbon black: manufactured by Mitsubishi Chemical Group Corporation, carbon black MA11
· Photopolymerization initiator
   Omnirad379EG: manufactured by IGM Resins, 2-(dimethylamino)-2-(4-methylbenzyl)-1-[4-(morpholino)phenyl]-1-butanone
   KAYACURE DETX-S: manufactured by Nippon Kayaku Co., Ltd., 2,4-diethylthioxanone

The amount contained of the urethane acrylate in the ink (% by mass) listed in Table 2 is a value calculated based on an amount contained of the urethane acrylate in the resin composition where the amount is calculated from the total amount of a hydroxy group-containing reactive active ingredient in the (a1), and the components (a2) and (a3), used as raw materials during manufacture.

In examples 1 to 32, which are embodiments of the present invention, each ink contains a urethane acrylate where the (meth)acryloyl group concentration is within a range from 4.0 to 8.0 mmol/g, and evaluations of "ink mist", "ink backing away", and "wet heat blocking" were good.

In contrast, in comparative examples 1 to 8, each ink contains a urethane acrylate where the (meth)acryloyl group concentration is outside the above range, and in comparative examples 7 and 8, evaluation of ink mist deteriorated due to a decrease in elasticity of the ink. In comparative examples 1 to 6, and 8, evaluation of wet heat blocking deteriorated because the (meth)acryloyl group concentration in the urethane acrylate was less than 4.0 mmol/g. Furthermore, in comparative examples 1 to 4, and 7, fluidity of the ink was poor, and ink backing away occurred.

Therefore, it can be understood that the present invention provides an active energy ray-curable ink that can control ink mist and ink backing away, has excellent curability, and can eliminate troubles during printing.

## Claims

1. An active energy ray-curable ink comprising:
a urethane (meth)acrylate (A); and a (meth)acrylic compound (B) other than (A), wherein
a (meth)acryloyl group concentration in the urethane (meth)acrylate (A) is within a range from 4.0 to 8.0 mmol/g.

2. The active energy ray-curable ink according to claim 1, wherein
the urethane (meth)acrylate (A) is a reaction product of a (meth)acrylic compound having one or more hydroxyl groups (a1), a polyol compound (a2) other than (a1), and an isocyanate compound (a3).

3. The active energy ray-curable ink according to claim 2, wherein
the (meth)acrylic compound having one or more hydroxyl groups (a1) includes at least one selected from the group consisting of a pentaerythritol poly (meth)acrylate, a dipentaerythritol poly (meth)acrylate, and a polypentaerythritol poly (meth)acrylate.

4. The active energy ray-curable ink according to claim 2, wherein
the polyol compound (a2) includes at least one selected from the group consisting of a polyol compound having 3 to 20 carbon atoms, and an alkylene oxide modified product of a polyol compound having 3 to 20 carbon atoms.

5. The active energy ray-curable ink according to claim 2, wherein
the polyol compound (a2) includes at least one selected from the group consisting of a propylene glycol, a butanediol, a neopentyl glycol, a hexanediol, an octanediol, a decanediol, glycerol, trimethylolpropane, pentaerythritol, and an alkylene oxide modified product thereof.

6. The active energy ray-curable ink according to claim 2, wherein
the polyol compound (a2) has a hydroxyl value within a range from 125 to 1,850 mg KOH/g.

7. The active energy ray-curable ink according to claim 2, wherein
the isocyanate compound (a3) is a diisocyanate compound.

8. The active energy ray-curable ink according to claim 2, wherein
a ratio [(al') / (a3')] of the number of moles (a1') in hydroxyl groups contained in the (meth)acrylic compound having one or more hydroxyl groups (a1) relative to the number of moles (a3') in isocyanate groups contained in the isocyanate compound (a3) is within a range from 0.2 to 0.6.

9. A method of producing the active energy ray-curable ink according to claim 1, the method comprising:
a step of obtaining a urethane (meth)acrylate (A) by reacting a (meth)acrylic compound having one or more hydroxyl groups (a1), a polyol compound (a2) which is other than the (a1), and an isocyanate compound (a3), in a (meth)acrylic compound (B).

10. A printed item comprising:
a cured product of the active energy ray-curable ink according to any one of claims 1 to 8 on a substrate.
